# EUROPÄISCHE PATENTSCHRIFT

(11) **EP 2 213 808 B1**
(45) Veröffentlichungstag und Bekanntmachung des Hinweises auf die Patenterteilung: **18.01.2012**
(21) Anmeldenummer: 09151608.8
(22) Anmeldetag: 29.01.2009
(51) Int. Cl.: E04B 5/38, E04B 5/48, F24D 3/16

(54) **Halbfertigteil und Verfahren zu dessen Herstellung**
Half-finished component and method of manufacturing
Produit semi-fini et son procédé de fabrication

(43) Veröffentlichungstag der Anmeldung: 04.08.2010
(73) Patentinhaber: Ziegelwerk Otto Staudacher GmbH & Co. KG, 86483 Balzhausen (DE)
(72) Erfinder: Staudacher, Otto, 86483, Balzhausen (DE)
(74) Vertreter: HOFFMANN EITLE

(56) Entgegenhaltungen:
- EP-A- 0 992 637
- DE-U1- 20 009 653
- DE-U1- 20 221 176
- FR-A- 992 469

## Beschreibung

### Technisches Gebiet

Die Erfindung betriff ein Halbfertigteil zum Herstellen eines Decken- oder Wandbauteil für Gebäude, das sich für die Beheizung vom Räumen eignet.

### Stand der Technik

Zur Beheizung von Räumen ist es seit langem üblich, auf Gebäudedecken sogenannte Fußbodenheizungen vorzusehen, die nachträglich auf den Gebäudedecken verlegt werden. Mittlerweile sind auch Systeme bekannt, bei denen Rohrleitungen für die Beheizung oder ggf. auch Kühlung von Räumen in den Gebäudedecken selbst vorgesehen werden.

So vertreibt beispielsweise die Anmelderin eine sogenannte Klimadecke. Hierbei handelt es sich um eine Fertigteildecke, die durch Ziegel gebildet ist, deren Zwischenräume mit Beton vergossen sind. In die Fertigteile sind werksseitig Rohrleitungen eingelassen, die auf der Baustelle miteinander sowie mit einer Heiz- bzw. Kühlquelle verbunden werden.

Ferner sind gattungsgemäße Fertigdecken in Form von Betonfertigteilen bekannt, in deren spätere Unterseite Rohrleitungen einbetoniert sind, die auf der Baustelle mit einer Heiz- bzw. Kühlquelle verbunden werden. Obgleich die Rohrleitungen vergleichsweise nah an der unteren Oberfläche der Betonfertigteile angeordnet sind, hat sich gezeigt, dass der Wirkungsgrad beim Heizen oder Kühlen eines Raumes begrenzt ist. Dies führt zu einer verbesserungsfähigen Energiebilanz. Ferner hat sich gezeigt, dass sich an der Betonfertigdecke im Kühlbetrieb vergleichsweise schnell Kondenswasser ablagert, was zu Schimmelbildung und sonstigen Bauschäden führen kann.

Ferner offenbart die DE 200 09 653 U1 ein Halbfertigteil gemäß dem Oberbegriff des Anspruchs 1 in Form einer vorgefertigten Betondecke für Gebäude mit Flächenheizungs- und/oder Flächenkühlungssystem mit einer Betonschicht, die eine Oberseite und eine dieser abgewandten Unterseite aufweist, und mehrere in der Betonschicht eingebetteten Versteifungsträgern, die über die Oberseite der Betonschicht überstehen.

### Darstellung der Erfindung

Es ist daher Aufgabe der vorliegenden Erfindung, ein Halbfertigteil zum Herstellen eines Decken- oder Wandbauteils für Gebäude bereitzustellen, das eine energieeffiziente Beheizung und/oder Kühlung vom Räumen ermöglicht und gute bauphysikalische Eigenschaften aufweist.

Diese Aufgabe wird erfindungsgemäß durch ein Halbfertigteil nach Anspruch 1, ein Decken- oder Wandbauteil nach Anspruch 2, sowie ein Verfahren zum Herstellen eines Halbfertigteils nach Anspruch 10 gelöst. Besonders bevorzugte Weiterbildungen der Erfindung sind in den abhängigen Ansprüchen angegeben.

Erfindungsgemäß umfasst ein erfindungsgemäßes Halbfertigteil zum Herstellen eines Decken- oder Wandbauteils eine Deckschicht, die eine Mehrzahl von Wärmedämmelementen, insbesondere Wärmedämmsteinen aufweist, wobei die Deckschicht bei Deckenbauteilen auf der Unterseite der Tragschicht und bei Wandbauteilen auf der Innenseite der Tragschicht angeordnet ist, und wobei zumindest eine Rohrleitung zumindest abschnittsweise in die Deckschicht eingesetzt ist. Hierdurch wird gegenüber geheizten Fertigdecken aus Beton eine deutliche energieeffizientere Beheizung und/oder Kühlung von Räumen erreicht, insbesondere da die Deckschicht verhindert, dass mittels des in den Rohrleitungen zugeführten Heiz- bzw. Kühlmediums das gesamte Decken- bzw. Wandbauteil geheizt bzw. gekühlt wird. Auf diese Weise kann ein deutlich größerer Anteil der zugeführte Wärme- bzw. Kälteenergie für die Klimatisierung des jeweiligen Raumes genutzt werden. Dies ermöglicht nicht nur erhebliche Energieeinsparungen, sondern auch ein schnelleres Ansprechen des Heiz- bzw. Kühlsystems. Dabei ist zu beachten, dass Tragschichten aus Beton einen erheblichen Teil der durch die Rohrleitungen eingebrachten Wärme- bzw. Kälteenergie absorbieren würden. Dies wird nunmehr durch die thermische Entkoppelung der Tragschichten von der mindestens einen Rohrleitung verhindert.

Das Halbfertigteil zeichnet sich dadurch aus, dass die Tragschicht aus Stahl- und/oder Spanbeton eine Mehrzahl von aus der Tragschicht senkrecht zu deren Ebene hervorstehenden Bewehrungselementen, insbesondere Gitterträgern aufweist, und dass die Deckschicht auf der von den hervorstehenden Bewehrungselementen abgewandten Seite der Tragschicht angeordnet ist. Das erfindungsgemäße Halbfertigteil, das bereits mit der mindestens einen Rohrleitung versehen ist, kann somit - in an sich bekannter Weise - problemlos auf der Baustelle verlegt und abschließend mit einer Ortbetonschicht versehen werden. Dabei erleichtert der Einsatz eines Halbfertigteils gegenüber einem Fertigteil den Transport- und Montagevorgang erheblich. Ferner bietet ein Halbfertigteil gegenüber Fertigteilen verbesserte Anschlussmöglichkeiten zu benachbarten Bauteilen wie Wänden, Balkonen, Treppen und dergleichen, was sowohl statische als auch bauphysikalische Vorteile besitzt.

Auch gegenüber einer monolithischen Bauweise besitzt das erfindungsgemäße Halbfertigteil erhebliche Vorteile. Dies gilt insbesondere für die erfindungsgemäße Decken- bzw. Gewandkonstruktion bei der eine Deckschicht mit einer Mehrzahl von Wärmedämmelementen wie mindest eine darin eingebettete Rohrleitung vorgesehen sind. Diese Deckschicht samt Rohrleitung lässt sich deutlich präziser und zügiger werkseitig in einem Halbfertigteil vereinen, was nicht nur den Bauablauf beschleunigt, sondern auch für eine verbesserte Qualität und Dauerhaftigkeit des späteren Decken- bzw. Wandbauteils sorgt.

Darüber hinaus ermöglicht das erfindungsgemäße Halbfertigteil zum Herstellen eines Decken- bzw. Wandbauteils erhebliche bauphysikalische Vorteile gegenüber dem Stand der Technik, insbesondere da die vorzugsweise kapillaren und wärmespeichernden Dämmelemente der Deckschicht einen Feuchtigkeitsausgleich ermöglichen und somit die Wahrscheinlichkeit von Kondenswasserbildung und Feuchtigkeitsablagerung an gekühlten Bauteilen eingeschränkt wird. Hierdurch wird die Gefahr einer Schimmelbildung vermindert, und auch sonstige bauphysikalische Probleme wie beispielsweise Restbildung, Korrosion oder dergleichen können beseitigt oder zumindest abgemildert werden.

Darüber hinaus besitzt das erfindungsgemäße Halbfertigteil zum Herstellen eines Decken- bzw. Wandbauteils jedoch auch erhebliche Vorteile gegenüber bereits bekannten, beheizten Ziegeldecken, wie insbesondere verbesserte statische Eigenschaften, einen verbesserten Schallschutz und eine erleichterte Anbindung von benachbarten Bauteilen wie beispielsweise Isokörben für Balkone.

Schließlich bietet das erfindungsgemäße Halbfertigteil zum Herstellen eines Decken- bzw. Wandbauteils auch ein sehr angenehmes Wohnklima. Denn während herkömmliche Radiatorenheizungen oder Umluftklimaanlagen primär die Raumluft erwärmen und diese dann durch Umwälzung und Konvektion im Raum verteilen, basiert das erfindungsgemäße Decke- bzw. Wandbauteil auf einem Strahlungsaustausch zwischen einer warmen und einer kalten Fläche. Dabei bewegt sich die Wärmestrahlung von der warmen zur kalten Fläche, der kühlere Körper nimmt die Strahlung auf und erwärmt sich dabei. Das erfindungsgemäße Halbfertigteil zum Herstellen eines Wand- bzw. Deckenbauteils erwärmt also die Raumluft nicht direkt, sondern indirekt über die Oberflächen, die sich unter bzw. neben - und damit im Strahlungsfeld - des Wand- bzw. Deckenbauteils befinden (z.B. Fußboden, Wände, Möbel, etc.). Im Falle des Kühlens funktioniert dieses Prinzip genau umgekehrt: Das von einem Kühlmedium durchflutete Decken- oder Wandbauteil nimmt dann die Wärmestrahlung aus dem Raum auf, d.h. Fußboden, Wände und Einrichtungsgegenstände kühlen sich ab.

Ein erfindungsgemäßes Decken- oder Wandbauteil ist in Anspruch 2 definiert.

Die Wärmedämmelemente der erfindungsgemäßen Deckschicht können im Rahmen der Erfindung aus unterschiedlichsten Materialien und Formen ausgewählt sein. Gemäß einer Weiterbildung der Erfindung ist jedoch vorgesehen, dass die Deckschicht eine Mehrzahl von Ziegeln aufweist. Diese ermöglichen neben einem angenehmen Wohnklima ausgezeichnete bauphysikalische Eigenschaften, wie insbesondere einen guten Feuchtigkeitsausgleich, der insbesondere bei einem Kühlbetrieb vorteilhaft ist. Unter einem "Ziegel" wird dabei ein Wärmedämmstein verstanden, der auf einem gebrannten Tonmaterial basiert.

Gemäß einer Weiterbildung der Erfindung ist ferner vorgesehen, dass zumindest eine Rohrleitung näher zu einer freien Oberfläche der Deckschicht als zu einer an die benachbarte Tragschicht angrenzenden Oberfläche der Deckschicht angeordnet ist. Hierdurch ergibt sich ein besonders schnelles Ansprechverhalten und eine besonders gute Energiebilanz des Heiz- bzw. Kühlsystems, ohne das aufwändige Zusatzmaßnahmen erforderlich wären.

Gemäß einer Weiterbildung der Erfindung ist ferner vorgesehen, dass die mindestens eine Rohrleitung in Wärmeleitmittel eingebettet ist. Hierdurch kann verhindert werden, dass sich innerhalb der Deckschicht bzw. der Rohrleitung ein Wärme- bzw. Kältestau einstellt. Vielmehr wird durch das Wärmeleitmittel sichergestellt, dass die über die Rohrleitung zugeführte Wärme bzw. Kälte zügig und ohne Verluste an den angrenzenden und zu klimatisierenden Raum weitergeleitet wird.

Die Wärmedämmsteine der Deckschicht können im Rahmen der Erfindung auf unterschiedlichster Art und Weise ausgestaltet sein. Gemäß einer Weiterbildung der Erfindung ist es jedoch bevorzugt, dass die Wärmedämmsteine der Deckschicht jeweils eine Mehrzahl von (Hoch-)Löchern aufweisen, die sich im Wesentlichen parallel zur Erstreckungsebene der Deckschicht erstrecken. Hierdurch ergibt sich nicht nur ein leichter Einbau der jeweiligen Rohrleitungen, sondern kann auch auf optimale Weise das Wärmedämmvermögen der Wärmedämmsteine genutzt werden.

Gemäß einer weiteren Ausführungsform der Erfindung ist vorgesehen, dass die Wärmedämmelemente der Deckschicht mit der benachbarten Tragschicht verzahnt sind. Dies kann beispielsweise über Stege oder Rippen geschehen, die an den Wärmedämmelementen hervorstehen. Im Falle von Wärmedämmsteinen mit (Hoch-)Löchern kann die Verzahnung beispielsweise auch durch geöffnete oder frei geschnittene (Hoch-)Löcher erfolgen. In allen Fällen ergibt sich ein guter und dauerhafter Verbund zwischen Deckschicht und Tragschicht, ohne dass hierfür separate Verbundmittel erforderlich wären.

Um eine möglichst einfache und dennoch dauerhafte und energieeffiziente Herstellung des erfindungsgemäßen Decken- oder Wandbauteils zu erzielen, ist es gemäß einer Weiterbildung der Erfindung vorgesehen, dass der Stoßbereich zwischen benachbarten Wärmedämmelementen frei von Füllstoffen ist. Ein Verkleben oder sonstiges Verbinden der Wärmedämmelemente ist somit nicht erforderlich, sondern die Wärmedämmelemente müssen lediglich in der gewünschten Konfiguration ausgelegt und anschließend mit der Tragschicht versehen werden.

Ein erfindungsgemäßes Verfahren zum Herstellen des erfindungsgemäßen Halbfertigteils ist in Anspruch 10 definiert. Dieses zeichnet sich dadurch aus, dass die mindestens eine Rohrleitung bereits vor dem Aufbringen einer Tragschicht aus Beton in

Ausnehmungen in den Wärmeelementen eingelegt wird. Hierdurch ist es nicht erforderlich, das Halbfertigteil nach dem Betoniervorgang zu wenden und im gewendeten Zustand die mindestens eine Rohrleitung einzulegen. Auf diese Weise wird nicht nur der Herstellungsvorgang vereinfacht, sondern es besteht auch ohne separate Putzschicht eine verminderte Gefahr von Beschädigungen der mindestens einen Rohrleitung. Nicht zuletzt kann durch den Verzicht auf einen separaten Wendevorgang auch die Arbeitssicherheit verbessert werden.

Gemäß einer Weiterbildung des erfindungsgemäßen Verfahrens ist vorgesehen, dass die mindestens eine Rohrleitung nach dem Einlegen zumindest abschnittsweise mit einem Wärmeleitmittel umhüllt wird. Hierdurch ergibt sich ein optimaler Wirkungsgrad des Heiz- bzw. Kühlsystems, ohne dass spätere Eingriffe in das Halbfertigteil erforderlich sind.

Darüber hinaus ist gemäß einer Weiterbildung der Erfindung vorgesehen, dass die Ausnehmungen nach dem Einlegen und gegebenenfalls Umhüllen der Rohrleitung zumindest abschnittsweise durch einen Wärmedämmabschnitt (z. B. Wärmedämmstreifen) verschlossen werden. Hierdurch wird verhindert, dass die für die Rohrleitungen vorgesehenen Ausnehmungen im späteren Wand- bzw. Deckenbauteil Wärmebrücken bilden.

### Kurze Beschreibung der Zeichnungen

- Figur 1: zeigt schematisch eine Schnittansicht eines Deckenbauteils bzw. eines Halbfertigteils gemäß einer ersten bevorzugten Ausführungsform der vorliegenden Erfindung;
- Figur 2: zeigt schematisch eine freigeschnittene Draufsicht einer Mehrzahl verlegter Halbfertigteile für ein Deckenbauteil;
- Figur 3: zeigt schematisch eine Schnittansicht eines Deckenbauteils bzw. eines Halbfertigteils gemäß einer zweiten bevorzugten Ausführungsform der vorliegenden Erfindung.

Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

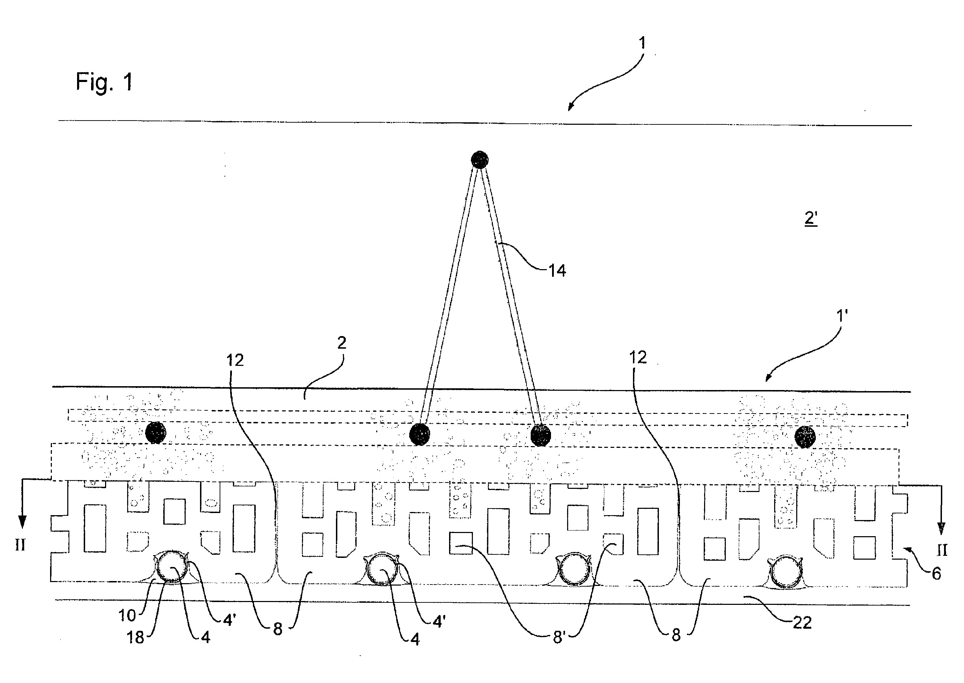

Ein Deckenbauteil 1 bzw. ein Halbfertigteil 1' zum Herstellen des Deckenbauteils 1 ist in Fig. 1 schematisch in einer Schnittansicht als bevorzugte Ausführungsform der vorliegenden Erfindung gezeigt. Das Halbfertigteil 1' besitzt zunächst eine Tragschicht 2 aus Stahlbeton, die eine Mehrzahl von sogenannten Gitterträgern 14 aufweist, die aus der Tragfläche 2 senkrecht zu deren Ebene (von unten nach oben in Fig. 1) hervorstehen. Die Gitterträger 14 dienen in bekannter Weise als Transport- und Montagesicherung für das Halbfertigteil 1' sowie zur Sicherstellung eines ausreichenden Verbundes zu einer späteren Ortbetonschicht 2'.

Auf der Unterseite der Tragschicht 2 weist das Halbfertigteil 1' eine Deckschicht 6 auf, die in der vorliegenden Ausführungsform eine Mehrzahl von Ziegeln aufweist, obgleich es sich auch um andere Wärmedämmelemente handeln kann. Die Ziegel 8 weisen jeweils eine Mehrzahl von Löchern 8' auf, die sich im Wesentlichen parallel zur Erstreckungsebene der Deckschicht 6 (senkrecht zur Zeichenebene in Fig. 1) erstrecken. Einige der Löcher sind zur Tragschicht 2 hin offen, sodass die Ziegel 8 der Deckschicht 6 mit dem Beton der benachbarten Tragschicht 2 verzahnt sind. In Fig. 1 ist ferner zu erkennen, dass der Schutzbereich 12 zwischen benachbarten Ziegeln 8 frei von Füllstoffen ist, d.h. diese sind "knirsch" aneinander gelegt.

In die Deckschicht 6 ist eine Rohrleitung 4 eingebettet, wobei die Rohrleitung 4 in der vorliegenden Ausführungsform an der freien Oberfläche der Deckschicht 6 gelegen ist. Die Rohrleitung 4 dient zum Zuführen eines Heiz- und/oder Kühlmediums, um angrenzende Räume zu temperieren. Dabei ist die Rohrleitung 4 in Ausnehmungen 4' eingebettet, die in den Ziegeln 8 von vornherein vorgesehen oder nachträglich eingebracht sind. Um die Rohrleitung 4 in der jeweiligen Ausnehmung 4' zu halten, sind Klammern 18 vorgesehen, obgleich auch andere Haltemittel zum Einsatz kommen können. Um darüber hinaus eine optimale thermische Einbindung der Rohrleitung 4 in die Ziegel 8 zu gewährleisten, ist die Rohrleitung 4 in Wärmeleitmittel 10, beispielsweise eine Wärmeleitpaste oder dergleichen eingebettet.

Abschließend kann das Halbfertigteil 1' ab Werk oder gegebenenfalls auf der Baustelle mit einer Putzschicht 22 versehen werden.

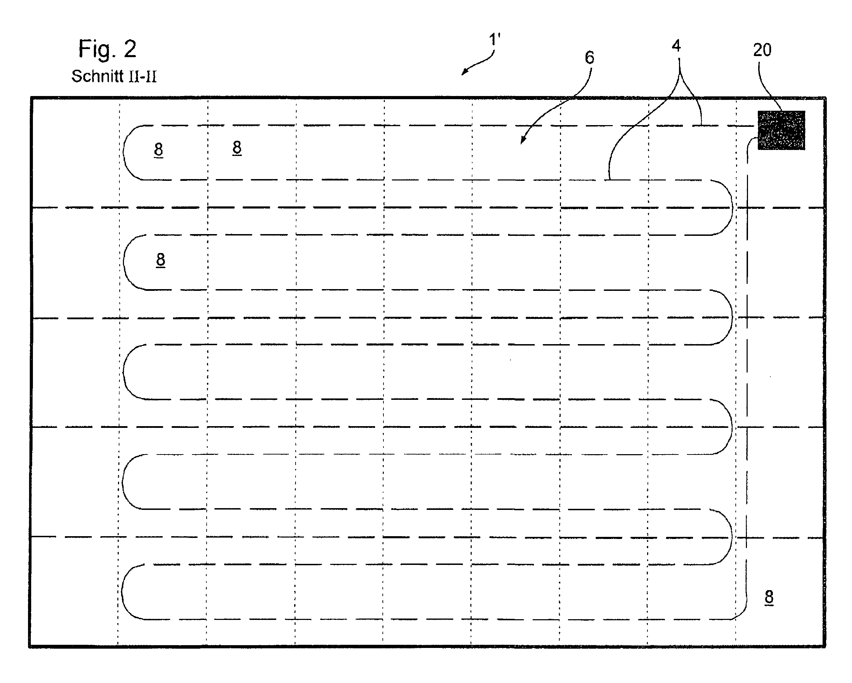

Der Verlauf der Rohrleitung 4 ist in Fig. 2 schematisch in einer freigeschnittenen Draufsicht des Halbfertigteils 1' dargestellt. Es ist zu erkennen, dass sich die Rohrleitung 4 gleichmäßig und schlangenartig über das gesamte Halbfertigteil erstreckt und nach Art einer Schlaufe ausgebildet ist, wobei die beiden Schlaufenenden in einem Anschlussabschnitt 20 münden, an welchem die Rohrleitung 4 des Halbfertigteils 1' mit der Rohrleitung eines benachbarten Halbfertigteils oder gegebenenfalls einer nicht gezeigten Quelle für Heiz- und/oder Kühlmediums verbunden werden kann.

Die Herstellung des erfindungsgemäßen Halbfertigteils 1' vollzieht sich beispielsweise wie folgt. Zunächst werden Ziegel 8 beispielsweise in einem Fertigteilwerk auf einer Schalung angeordnet, wobei sie in den Stoßbereichen 12 aneinander anliegen. Anschließend werden die Gitterträger 14 sowie konstruktive Bewehrung mittels entsprechender Abstandhalter auf den Ziegeln 8 aufgelegt, um schließlich eine Betonschicht zur Fertigstellung der Tragschicht 2 aufzubringen.

Nachdem zumindest teilweisen Aushärten der Tragschicht 2 kann das Halbfertigteil 1' angehoben werden, um nun die Rohrleitung 4 in die jeweiligen Ausnehmungen 4' einzulegen und dort mittels der Klammern 18 zu fixieren. Nunmehr kann das Wärmeleitmittel 10 in die Ausnehmungen 4' eingebracht werden, um abschließend sofort oder gegebenenfalls erst auf der Baustelle die Putzschicht 22 aufzubringen.

In diesem Zustand kann das Halbfertigteil 1' auf die Baustelle transportiert werden und dort in üblicherweise bearbeitet werden, indem nämlich nach dem Verlegen des Halbfertigteils 1' eine Ortbetonschicht 2' aufgebracht wird, um das Deckenbauteil 1 fertigzustellen. Beim Verlegen der jeweiligen Halbfertigteile 1' werden die Rohrleitungen 4 benachbarter Halbfertigteile miteinander zu einem Kreislauf verbunden, und dieser Kreislauf wird an eine nicht gezeigte Quelle für ein Heiz- und/oder Kühlmedium angeschlossen.

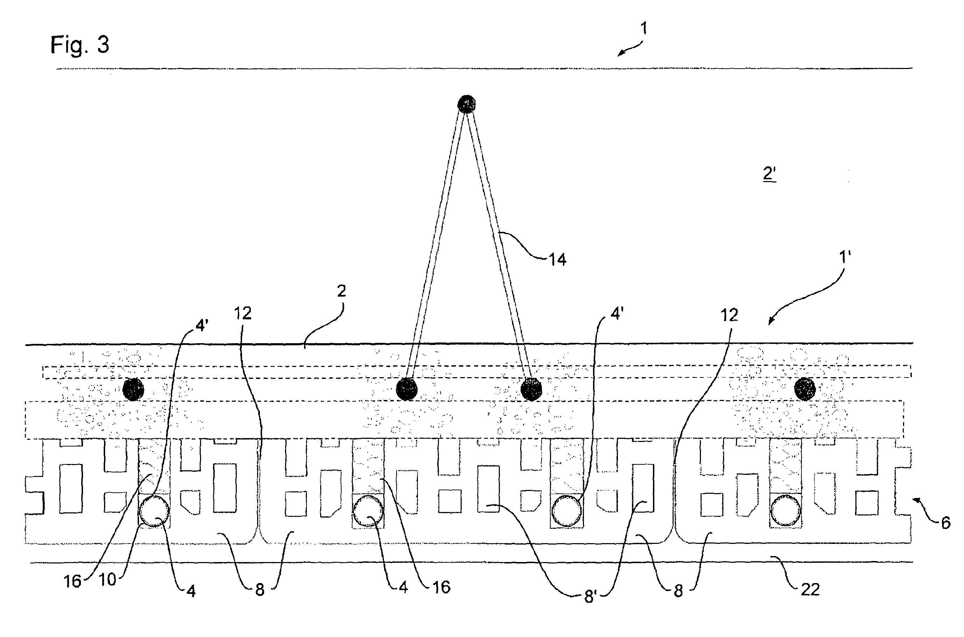

Eine zweite bevorzugte Ausführungsform des erfindungsgemäßen Halbfertigteils 1' bzw. Deckenbauteils 1 ist in Fig. 3 schematisch in einer Schnittansicht dargestellt. Diese Ausführungsform unterscheidet sich von der in Fig. 1 gezeigten ersten Ausführungsform primär dadurch, dass die Ausnehmungen 4' in den Ziegeln 8 von der der Tragschicht 2 zugewandten Seite eingebracht sind. Dabei ist die Ausnehmung 4' zur Tragschicht 2 hin durch Wärmedämmstreifen 16 verschlossen. Hierdurch wird ermöglicht, dass die Rohrleitung 4' bereits vor dem Aufbringen der Tragschicht 2 und somit ohne Aufstellen oder Wenden des Halbfertigteils 1' eingebracht werden kann.

Dementsprechend vollzieht sich der Herstellungsablauf in der vorliegenden Ausführungsform wie folgt. Zunächst werden erneut die Ziegel 8 auf einer Schalung angeordnet, wobei sie in den Stoßbereichen 12 aneinander anliegen. Anschließend wird die Rohrleitung 4 von oben her in die Ausnehmungen 4' eingebracht und mittels des Wärmeleitmittels 10 in die Ziegel 4 thermisch eingebunden. Daraufhin werden die Wärmedämmstreifen 16 in die Ausnehmungen 4' eingelegt, um anschließend die Gitterträger und die Bewehrung aufzulegen und die Tragschicht 2 zu betonieren. Der übrige Herstellungs- und Verarbeitungsablauf entspricht demjenigen der ersten Ausführungsform.

Obgleich die vorstehenden Ausführungsformen sich beispielhaft auf ein Deckenbauteil beziehen, lässt sich die vorliegende Erfindung in gleicher Weise auf entsprechende Wandbauteile anwenden.

## Patentansprüche

1. Halbfertigteil (1') zum Herstellen eines Decken- oder Wandbauteils (1) für Gebäude, umfassend:
eine Tragschicht (2) aus Stahl- und/oder Spannbeton, die eine Mehrzahl von aus der Tragschicht senkrecht zu deren Ebene hervorstehenden Bewehrungselementen (14),
insbesondere Gitterträgern, aufweist,
**dadurch gekennzeichnet, daß**
eine Deckschicht (6), die eine Mehrzahl von Wärmedämmelementen (8), insbesondere Wärmedämmsteinen aufweist auf der von den hervorstehenden Bewehrungselementen (14) abgewandten Seite der Tragschicht (2) angeordnet ist, und
mindestens eine Rohrleitung (4) zum Zuführen eines Heiz- und/oder Kühlmediums zumindest abschnittsweise in die Deckschicht (6) eingebettet ist.

2. Decken- oder Wandbauteil (1) für Gebäude, mit einem Halbfertigteil nach Anspruch 1,
**dadurch gekennzeichnet, dass**
die Deckschicht (6) bei Deckenbauteilen auf der Unterseite der Tragschicht (2) und bei Wandbauteilen auf der Innenseite der Tragschicht (2) angeordnet ist.

3. Decken- oder Wandbauteil nach Anspruch 2, **dadurch gekennzeichnet, dass** die Deckschicht (6) eine Mehrzahl von Ziegeln (8) aufweist.

4. Decken- oder Wandbauteil nach Anspruch 2 oder 3, **dadurch gekennzeichnet, dass** die mindestens eine Rohrleitung (4) näher zu einer freien Oberfläche der Deckschicht (6) als zu einer an die benachbarte Tragschicht (2) angrenzenden Oberfläche der Deckschicht (6) angeordnet ist.

5. Decken- oder Wandbauteil nach einem der Ansprüche 2 bis 4, **dadurch gekennzeichnet, dass** die mindestens eine Rohrleitung (4) in Wärmeleitmittel (10) eingebettet ist.

6. Decken- oder Wandbauteil nach einem der Ansprüche 2 bis 5, **dadurch gekennzeichnet, dass** die Wärmedämmsteine (8) der Deckschicht (6) jeweils eine Mehrzahl von Löchern (8') aufweisen, die sich im Wesentlichen parallel zur Erstreckungsebene der Deckschicht (6) erstrecken.

7. Decken- oder Wandbauteil nach einem der Ansprüche 2 bis 6, **dadurch gekennzeichnet, dass** die Wärmedämmelemente (8) der Deckschicht (6) mit der benachbarten Tragschicht (2) verzahnt sind.

8. Decken- oder Wandbauteil nach einem der Ansprüche 2 bis 7, **dadurch gekennzeichnet, dass** der Stoßbereich (12) zwischen benachbarten Wärmedämmelementen (8) frei von Füllstoffen ist.

9. Decken- oder Wandbauteil nach einem der Ansprüche 2 bis 8, **dadurch gekennzeichnet, dass** die mindestens eine Rohrleitung (4) mit einer Quelle für Heiz- und/oder Kühlmedium in Verbindung steht.

10. Verfahren zum Herstellen eines Halbfertigteils nach Anspruch 1, mit den Schritten:
Anordnen einer Mehrzahl von Wärmedämmelementen (8) auf einer Schalung,
Einlegen mindestens einer Rohrleitung (4) in in den Wärmedämmelementen (8) vorgesehene Ausnehmungen (4'), und
Aufbringen einer Tragschicht (2) aus Stahl- und/oder Spannbeton, die eine Mehrzahl von aus der Tragschicht senkrecht zu deren Ebene hervorstehenden Bewehrungselementen (14), insbesondere Gitterträgern, aufweist.

11. Verfahren nach Anspruch 10, **dadurch gekennzeichnet, dass** die mindestens eine Rohrleitung (4) nach dem Einlegen zumindest abschnittsweise mit einem Wärmeleitmittel (10) umhüllt wird.

12. Verfahren nach Anspruch 10 oder 11, **dadurch gekennzeichnet, dass** die Ausnehmungen (4') nach dem Einlegen und ggf. Umhüllen der Rohrleitung (4) zumindest abschnittsweise durch einen Wärmedämmabschnitt (16) zur Tragschicht hin verschlossen werden.

## Claims

1. Semi-finished part (1') for producing a ceiling component or wall component (1) for buildings, comprising:
a support layer (2) made from reinforced concrete and/or prestressed concrete which has a plurality of reinforcement elements (14), in particular grid supports, projecting from the support layer vertically to the plane thereof,
**characterised in that** a cover layer (6) which has a plurality of heat-insulating elements (8), in particular heat-insulating blocks, is arranged on the side of the support layer (2) facing away from the projecting reinforcement elements (14), and
at least one piece of piping (4) for feeding a heating medium and/or cooling medium is embedded in the cover layer (6) at least in some sections.

2. Ceiling component or wall component (1) for buildings, having a semi-finished part according to claim 1, **characterised in that** the cover layer (6) for ceiling components is arranged on the underside of the support layer (2) and for wall components is arranged on the inner side of the support layer (2).

3. Ceiling component or wall component according to claim 2, **characterised in that** the cover layer (6) has a plurality of tiles (8).

4. Ceiling component or wall component according to claim 2 or 3, **characterised in that** the at least one piece of piping (4) is arranged closer to a free surface of the cover layer (6) than to a surface of the cover layer (6) adjoining the adjacent support layer (2).

5. Ceiling component or wall component according to one of claims 2 to 4, **characterised in that** the at least one piece of piping (4) is embedded in heat-conducting means (10).

6. Ceiling component or wall component according to one of claims 2 to 5, **characterised in that** the heat-insulating blocks (8) of the cover layer (6) have in each case a plurality of holes (8') which extend essentially parallel to the extension plane of the cover layer (6).

7. Ceiling component or wall component according to one of claims 2 to 6, **characterised in that** the heat-insulating elements (8) of the cover layer (6) are interlocked with the adjacent support layer (2).

8. Ceiling component or wall component according to one of claims 2 to 7, **characterised in that** the abutting region (12) between adjacent heat-insulating elements (8) is free of fillers.

9. Ceiling component or wall component according to one of claims 2 to 8, **characterised in that** the at least one piece of piping (4) is connected to a source for heating medium and/or cooling medium.

10. Method for producing a semi-finished part according to claim 1, having the steps:
arranging a plurality of heat-insulating elements (8) on a formwork,
fixing at least one piece of piping (4) in the recesses (4') provided in the heat-insulating elements (8), and
applying a support layer (2) made from reinforced concrete and/or prestressed concrete which has a plurality of reinforcement elements (14), in particular grid supports, projecting from the support layer vertically to the plane thereof.

11. Method according to claim 10, **characterised in that** the at least one piece of piping (4) is encased at least in some sections by a heat-conducting means (10) after fixing.

12. Method according to claim 10 or 11, **characterised in that** the recesses (4') are closed towards the support layer at least in some sections by a heat-insulating section (16) after fixing and optionally encasing the piece of piping (4).

## Revendications

1. Produit semi-fini (1'), pour la fabrication d'un composant de plafond ou de mur (1) pour des bâtiments, comprenant :
une couche support (2) en béton armé et/ou précontraint, présentant une pluralité d'éléments d'armature (14), en particulier des supports à treillis, faisant saillie de la couche support, perpendiculairement à son plan,
**caractérisé en ce qu'**
une couche de couverture (6), présentant une pluralité d'éléments d'isolation thermique (8), en particulier des blocs d'isolation thermique, est disposée sur la face, opposée aux éléments d'armature (14) faisant saillie, de la couche support (2), et
au moins une tuyauterie (4), pour l'amenée d'un fluide de chauffage et/ou de refroidissement, est incorporée, au moins par tronçons, dans la couche de couverture (6).

2. Composant de plafond ou de mur (1) pour des bâtiments, avec un produit semi-fini selon la revendication 1,
**caractérisé en ce que**,
dans le cas de composants de plafond, la couche de couverture (6) est disposée sur la face inférieure de la couche support (2) et, dans le cas de composants de mur, elle est disposée sur la face intérieure de la couche support (2).

3. Composant de plafond ou de mur selon la revendication 2, **caractérisé en ce que** la couche de couverture (6) présente une pluralité de briques (8).

4. Composant de plafond ou de mur selon la revendication 2 ou 3, **caractérisé en ce que** la au moins une tuyauterie (4) est disposée plus près d'une surface libre de la couche de couverture (8) que d'une surface, limitrophe à la couche support (2) voisine, de la couche de couverture (6).

5. Composant de plafond ou de mur selon l'une des revendications 2 à 4, **caractérisé en ce que** la au moins une tuyauterie (4) est incorporée dans un produit conducteur de la chaleur (10).

6. Composant de plafond ou de mur selon l'une des revendications 2 à 5, **caractérisé en ce que** les blocs d'isolation thermique (8) de la couche de couverture (6) présentent chacun une pluralité de trous (8'), s'étendant sensiblement parallèlement au plan d'étendue de la couche de couverture (6).

7. Composant de plafond ou de mur selon l'une des revendications 2 à 6, **caractérisé en ce que** les éléments d'isolation thermique (8) de la couche de couverture (6) sont accouplés par denture à la couche support (2) voisine.

8. Composant de plafond ou de mur selon l'une des revendications 2 à 7, **caractérisé en ce que** la zone de joint (12) entre des éléments d'isolation thermique (8) voisins est exempte de charges.

9. Composant de plafond ou de mur selon l'une des revendications 2 à 8, **caractérisé en ce que** la au moins une tuyauterie (4) est reliée à une source de fluide de chauffage et/ou de refroidissement.

10. Procédé de fabrication d'un produit semi-fini selon la revendication 1, comprenant les étapes consistant à :
agencer une pluralité d'éléments d'isolation thermique (8) sur un coffrage,
insérer au moins une tuyauterie (4) dans des évidements (4') prévus dans les éléments d'isolation thermique (8),
appliquer une couche support (2), en béton armé et/ou précontraint, présentant une pluralité d'éléments d'armature (14), en particulier des supports à treillis, faisant saillie de la couche support, perpendiculairement à son plan.

11. Procédé selon la revendication 10, **caractérisé en ce que**, après l'insertion, la au moins une tuyauterie (4) est gainée, au moins par tronçons, avec un produit conducteur de la chaleur (10).

12. Procédé selon la revendication 10 ou 11, **caractérisé en ce que**, après l'insertion et, le cas échéant, le gainage de la tuyauterie (4), les évidements (4') sont fermés, au moins par tronçons, par rapport à la couche support au moyen d'un tronçon d'isolation thermique (16).
